Europäisches Patentamt

(19) European Patent Office

Office européen des brevets

(11) Publication number : **0 465 629 B1**

(12) **EUROPEAN PATENT SPECIFICATION**

(45) Date of publication of patent specification :
13.10.93 Bulletin 93/41

(51) Int. Cl.⁵ : **A61K 35/80, A23K 1/16**

(21) Application number : **91903428.0**

(22) Date of filing : **22.01.91**

(86) International application number :
**PCT/SE91/00040**

(87) International publication number :
**WO 91/11192 08.08.91 Gazette 91/18**

(54) ACIDIFYING COMPOSITION CONTAINING DIATOMACEOUS EARTH.

Divisional application 93100288.5 filed on 22/01/91.

(30) Priority : **29.01.90 SE 9000300**

(43) Date of publication of application :
**15.01.92 Bulletin 92/03**

(45) Publication of the grant of the patent :
**13.10.93 Bulletin 93/41**

(84) Designated Contracting States :
**AT BE CH DE DK ES FR GB GR IT LI LU NL SE**

(56) References cited :
**FR-A- 2 647 309**
**Enc. Chem. Techn., Kirk-Othmer, 3rd ed., vol. 7, p. 807**

(73) Proprietor : **KEMIRA KEMI AKTIEBOLAG**
**P.O. Box 902**
**S-251 09 Helsingborg (SE)**

(72) Inventor : **MULLER, Arthur**
**Bärnstensgatan 19C**
**S-253 68 Helsingborg (SE)**
Inventor : **NILSSON, Torsten**
**Hälsögatan 5**
**S-253 72 Helsingborg (SE)**

(74) Representative : **Inger, Lars Ulf Bosson**
**L + U INGER Patentbyra AB Garvaregatan 12**
**S-262 63 Ängelholm (SE)**

## Description

The present invention relates to an acidifying composition for administering to monogastric animals.

The object of the present invention is to obtain an acidifying composition for monogastric animals, by means of which composition it is possible to buffer the pH of the gastro intestinal tract to a lower level.

It is known that certain feed stuff have a pH increasing effect in the gastric intestinal tract of monogastric animals, which causes conditions of diarrhoea, inter alia due to the an accompanying change of the bacterial flora, but also due to a different decomposition process of the nutrients in the intestine. It is most of all pig stocks that are affected by different diarrhoea conditions which cause a pronouncedly increased death rate. The problem is particularly pronounced at forced weaning. In order to solve this problem antibiotics are used to a great extent in order to eliminate the symptoms. This means great disadvantages due to arising antibiotic resistance of the bacteria, which is a bad thing, but means great costs as well. A general treatment with antibiotics is moreover, not allowed in Sweden any longer.

It is also known to administer acidifying substances to preferably monogastric animals, whereby these are added as chemical compounds which, most often, during decomposition form acidifying compounds/products. This is not desirable as chemical decomposition as such may involve losses in energy and undesired side reactions. Such a compound is e.g. urea phosphate which, at decomposition, creates a strong cooling of the gastric content. Thus several degrees decrease of the temperature can be determined which is an evident drawback.

Urea phosphate is moreover present in a suitable form for a good distribution.

Kirk-Othmer, Encyclopedia of Chemical Technology, 3rd Ed. vol. 7, p.607, J Wiley & Sons, discloses that diatomite can abosrb i.a. acids. There is, however, no disclosure of any intended use of such a combined composition or if the abosrbent will release the absorbed liquid.

It is a general desire that feed stuff components shall be in granular or pelletized form for simple handling and blending and a dust free environment.

It is thus a desire to find such types of acidifying compositions.

It has now surprisingly been found possible to be able to solve these problems by means of the present invention which consists of a mechanical mixture of an acid and an absorbent and is characterized in that the absorbent consists of diatomaceous earth, preferably in the form of so called "moler", to which up to 150 % by weight of acid in the form of phosphoric acid (100 % $H_3PO_4$) have been absorbed.

Further characteristics are evident from the accompanying claims.

By means of the present invention a non-baking, tacky-free, free flowing granulate having a high acid content and thereby a high acidifying ability is obtained.

Diatomaceous earth is the geological name of a naturally occurring mixture of diatoms and clay. Such a mixture is present in the Limfjorden, Denmark, where this quality is named "moler", where it is dug in mines on the islands of Mors and Fur. Diatomaceous earth was sedimented on the sea bottom more that 50 milj years ago and simultaneously with this sedimentation an admixture of clay took place. Diatoms are silicon algae the skeletons of which have a very high capillarity.

Diatomaceous earth can be oven dried to a moisture content of 3 to 6 % but preferably be calcined to a moisture content of 0.5 to 2 % as well, whereby the chemically bound water is driven off.

A granulate size of 0.1 to 2, preferably 0.2 to 1 mm, is a suitable fraction size to be utilized in the present composition.

The present composition is readily prepared by spraying the intended amount of phosphoric acid, $H_3PO_4$, onto granules of diatomaceous earth, preferably "moler", oven dried or calcined, in e.g. a Pascal mixer or another suitable mixer. Spraying can be made in any suitable industrial way.

The acidifying composition thus contains a mechanical admixture of diatomaceous earth, such as "moler", and phosphoric acid where the acid has been absorbed in the capillaries of the diatomaceous earth.

The composition is administered via the feed stuff when acidification of the gastro intestinal tract is desired.

In the gastro intestinal tract the acid diffuses successively out into the gastro liquid and provides acidification. The release is partly sustained due to the capillarity. The inert diatomaceous earth continues through the gastro intestinal tract. The acidifying composition is added in an amount of about 0.1 to 2 % by weight of the feed stuff, preferably about 0.5 % by weight of the feed stuff. The amount is of course depending on the content of phosphoric acid present and the present need for decrease of pH.

Monogastric animals to which the composition according to the invention can be administered are pigs, poultry and other birds, horses, dogs, cats, and others.

Other absorbents which have been discussed for the present purpose are attapulgite, sepiolite (fibrous clays), erionite (a zeolite), and wollastonite ( mica material). All these, however, show cancerous properties and are thus unsuitable. Such properties are not shown by the present diatomaceous earth.

It has all surprisingly been found that the water solubility of side components present in the diatomaceous earth decreases after absorption of the phosphoric acid. This is evident from the table below where the water solubility of certain elements has been analysed in the ingoing material of diatomaceous earth, as well as in the final product.

```
TABLE
```
Solubility in water of components present in diatomaceous earth (D.E.) and in the composition of the present invention.

| Element | Amount | (D.E.) | Comp. of the present invention |
|---------|--------|--------|-------------------------------|
| Fe | % | 5.8 | 1.1 |
| Na | % | 0.18 | 0.058 |
| F | ppm | 480 | 21 |
| Zn | " | 95 | 29 |
| Cu | " | 130 | 17 |
| Ni | " | 25 | 3 |
| Mn | " | 310 | 65 |
| Cr | " | 140 | 20 |
| As | " | 11 | 1.9 |
| Pb | " | 6 | 1 |

As evident from the above data the amount of water soluble elements is considerably lower in the final composition than in the starting material. This means per se a further advantage using the present invention.

Suitably 25 to 150 % by weight of phosphoric acid (100 % $H_3PO_4$) are added to the "moler" per weight unit, even though a smaller amount can be used.

The composition according to the invention can be dry mixed into feed stuff mixtures and be administered as such, whereby the physical form of the composition, as free flowing granules, makes it very easy to dose. The composition can also be mixed into the feed stuff composition which is then granulated, pelletized or extruded in another way.

## Claims

1. Composition comprising an acid and an absorbent for acidifying treatment of monogastric animals, **characterized** in that the absorbent consists of diatomaceous earth to which absorbent phosphoric acid has been absorbed.

2. Composition according to claim 1, **characterized** in that 25 to 150 parts per weight of phosphoric acid have absorbed to 100 parts per weight of diatomaceous earth.

3. Composition according to claims 1 or 2, **characterized** in that the diatomaceous earth has been calcined prior to the absorption of the phosphoric acid.

4. Composition according to claims 1 to 3, **characterized** in that the diatomaceous earth consists of a fraction having a particle size of 0.1 to 2 mm, preferably

5. Composition according to claim 4, **characterized** in that the particle size is 0.2 to 1 mm.

6.  Use of an acidifying composition according to one of claims 1 to 5 as an additive to feed stuff for monogastric animals.

## Patentansprüche

1.  Zusammensetzung mit einer Säure und einem Absorbens für die Ansäuerungsbehandlung von Tieren mit einem Magen, dadurch gekennzeichnet, daß das Absorbens aus Diatomeenerde besteht, auf welchem Absorbens Phosphorsäure absorbiert wurde.

2.  Zusammensetzung nach Anspruch 1, dadurch gekennteichnet, daß 25 bis 150 Gewichtsteile Phosphorsäure auf 100 Gewichtstellen Diatomeenerde absorbiert wurden.

3.  Zusammensetzung nach den Ansprüchen 1 oder 2, dadurch gekennzeichnet, daß die Diatomeenerde vor der Absorption der Phosphorsäure kalziniert wurde.

4.  Zusammensetzung nach den Ansprüchen 1 bis 3, dadurch gekennzeichnet, daß die Diatomeenerde aus einer Fraktion mit einer Teilchengröße von vorzugsweise 0,1 bis 2 mm besteht.

5.  Zusammensetzung nach Anspruch 4, dadurch gekennzeichnet, daß die Teilchengröße 0,2 bis 1 mm ist.

6.  Verwendung einer ansäuernden Zusammensetzung nach einem der Ansprüche 1 bis 5 als ein Additiv zu Futtermittel für Tiere mit einem Magen.

## Revendications

1.  Composition comprenant un acide et un absorbant pour le traitement d'acidification d'animaux monogastriques, caractérisée en ce que l'absorbant se compose de terre à diatomées, absorbant dans lequel de l'acide phosphorique a été absorbé.

2.  Composition suivant la revendication 1, caractérisée en ce que 25 à 150 parties en poids d'acide phosphorique ont été absorbées pour 100 parties en poids de terre à diatomées.

3.  Composition suivant l'une ou l'autre des revendications 1 et 2, caractérisée en ce que la terre à diatomées a été calcinée avant l'absorption de l'acide phosphorique.

4.  Composition suivant l'une quelconque des revendications 1 à 3, caractérisée en ce que la terre à diatomées est formée d'une fraction ayant avantageusement une taille de particule de 0,1 à 2 mm.

5.  Composition suivant la revendication 4, caractérisée en ce que la taille de particule est de 0,2 à 1 mm.

6.  Utilisation d'une composition d'acidification suivant l'une quelconque des revendications 1 à 5, comme additif à une matière alimentaire pour des animaux monogastriques.